# EUROPEAN PATENT APPLICATION

(11) **EP 3 148 043 A1**
(43) Date of publication of application: **29.03.2017**
(21) Application number: 16748249.6
(22) Date of filing: 24.06.2016
(51) Int. Cl.: H02J 7/00

(54) **CABLE WINDING DEVICE OF MOBILE PHONE CHARGER**

(30) Priority: 29.07.2015 CN 201520560727 U
(71) Applicant: LE Holdings (Beijing) Co., Ltd., Beijing 100025 (CN); Le Shi Zhi Xin Electronic Technology (Tianjin) Limited, Tianjin 300450 (CN)
(72) Inventor: XU, Youchao, Tianjin 300450 (CN); SU, Bin, Tianjin 300450 (CN)
(74) Representative: KIPA AB
(86) International application number: PCT/CN2016/087013
(87) International publication number: WO 2017/016352

(57) **Abstract**

The embodiment of the present disclosure provides a cable winding device of a mobile phone charger. The cable winding device comprises: a groove is formed in the shell of a mobile phone power adapter; soft rubber is arranged inside the groove; cable clamping grooves for fixing a mobile phone data cable are formed in the outer side of the soft rubber. According to the cable winding device of the mobile phone charger, disclosed according to the embodiment of the present disclosure, as the groove is formed in the shell of the mobile phone power adapter, the internal mainboard space of the mobile phone power adapter is effectively avoided, and thus the size of the mobile phone power adapter is not increased; the soft rubber is arranged inside the groove, the cable clamping grooves for fixing the mobile phone data cable are formed in the outer side of the soft rubber, and the mobile phone data cable can be orderly wound and fixed on the shell of the mobile phone power adapter and can be prevented from being tangled with other objects disorderly, so that the efficiency of using the mobile phone charger can be improved.

## Description

### FIELD OF TECHNOLOGY

The present disclosure generally relates to the technical field of electronics, and in particular to a cable winding device of a mobile phone charger.

### BACKGROUND

Along with development of electronic techniques, more and more people use mobile phones. As power stored in a mobile phone battery is limited, a user needs to charge a mobile phone with a mobile phone charger.

Conventionally, the mobile phone charger includes two parts, namely, a power adapter and a data cable. The power adapter is connected with the data cable through a USB (Universal Serial Bus) interface. The power adapter can convert high-voltage alternative current of 220V into low-voltage direct current of 5V, and electric energy can be conducted to a mobile phone charge interface through the data cable, so that power can be charged into the mobile phone.

To widen the moving range of the mobile phone in charge, the data cable is generally long. When being carried over, the data cable can be tangled with other objects disorderly, the user needs to separate the data cable from other objects before charge, and then the efficacy of using the mobile phone charger can be reduced.

Overall, the technical problems to be solved urgently by technicians of the field are to prevent the mobile phone data cable from being tangled with other objects disorderly and to improve the efficiency of using the mobile phone charger.

### SUMMARY

The embodiment of the present disclosure discloses a cable winding device of a mobile phone charger, and aims to solve the technical problems of preventing a mobile phone data cable from being tangled with other objects disorderly and improving the efficiency of using the mobile phone charger.

To solve the above problems, the embodiment of the present disclosure discloses a cable winding device of a mobile phone charger, including:
a groove is formed in the shell of a mobile phone power adapter, and soft rubber is arranged inside the groove;
cable clamping grooves for fixing a mobile phone data cable are formed in the outer side of the soft rubber.

Preferably, the soft rubber is thermo-plastic urethane TUP soft rubber.

Preferably, the soft rubber is arranged inside the groove in an injection molding manner.

Preferably, the shell of the mobile phone adapter takes the shape of a tetragonal prism with four corners.

Preferably, the groove is formed in any corner, and the soft rubber is arranged inside the groove in the injection molding manner.

Preferably, the groove is formed in any two nonadjacent corners, and the soft rubber is arranged inside the groove in the injection molding manner.

Preferably, the groove is formed in any three corners, and the soft rubber is arranged inside the groove in the injection molding manner.

Preferably, the groove is formed in all four corners, and the soft rubber is arranged inside the groove in the injection molding manner.

Preferably, at least two cable clamping grooves are formed in the outer side of the soft rubber.

Preferably, the two cable clamping grooves are respectively formed in two ends of the soft rubber.

The embodiment of the present disclosure provides the cable winding device of the mobile phone charger. As the groove is formed in the shell of the mobile phone power adapter, the internal mainboard space of the mobile phone power adapter is effectively avoided, and thus the size of the mobile phone power adapter is not increased; the soft rubber is arranged inside the groove, the cable clamping grooves for fixing the mobile phone data cable are formed in the outer side of the soft rubber, and the mobile phone data cable can be orderly wound and fixed on the shell of the mobile phone power adapter and can be prevented from being tangled with other objects disorderly, so that the efficiency of using the mobile phone charger can be improved.

### BRIEF DESCRIPTION OF FIGURES

To clearly describe the technical schemes in the embodiments of the present disclosure or in the prior art, figures needing to be used in the description of the embodiments or the prior art are briefly introduced in the followings, obviously, the figures in the following description are some embodiments of the present disclosure, and for common technicians of the field, other figures can be obtained according to the figures without creative work.
FIG. 1 shows the schematic diagram of the cable winding device of the mobile phone charger provided according to the embodiment of the present disclosure.
FIG. 2 shows the left view of the mobile phone charger provided according to the embodiment of the present disclosure.
FIG. 3 shows the right view of the mobile phone charger provided according to the embodiment of the present disclosure.
FIG. 4 shows the side view of the mobile phone charger provided according to the embodiment of the present disclosure.
FIG. 5 shows the top view of the mobile phone charger provided according to the embodiment of the present disclosure.
FIG. 6 shows the schematic diagram of a wound cable provided according to the embodiment of the present disclosure.

### DESCRIPTION OF THE EMBODIMENTS

To make the purposes, technical schemes and advantages of the embodiments of the present disclosure more clear, the technical schemes in the embodiments of the present disclosure are clearly and completely described with the following figures in the embodiments of the present disclosure, the described embodiments are not all but a part of the embodiments of the present disclosure. Based on the embodiments of the present disclosure, other embodiments obtained by common technicians of the field without creative work all belong to the protection scope of the present disclosure.

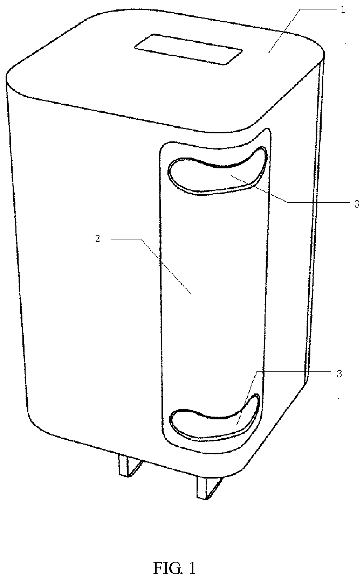

FIG. 1 shows the schematic diagram of the cable winding device of the mobile phone charger provided according to the embodiment of the present disclosure;

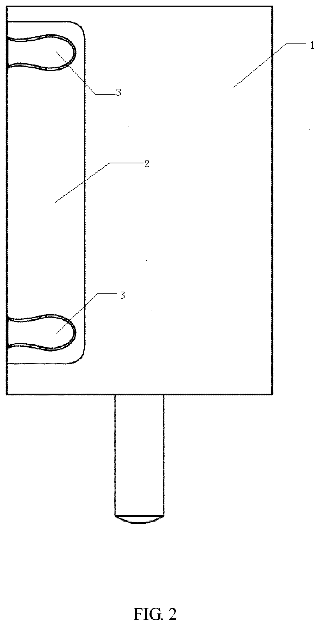

FIG. 2 shows the left view of the mobile phone charger provided according to the embodiment of the present disclosure;

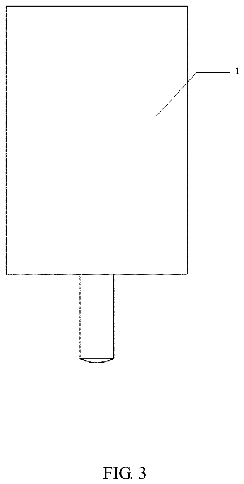

FIG. 3 shows the right view of the mobile phone charger provided according to the embodiment of the present disclosure;

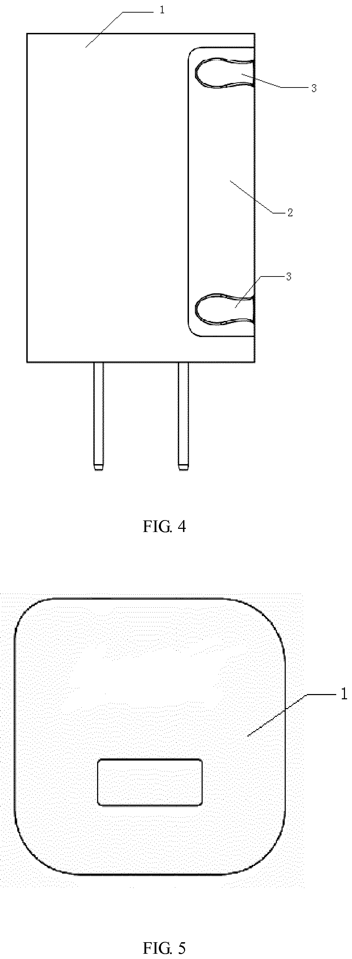

FIG. 4 shows the side view of the mobile phone charger provided according to the embodiment of the present disclosure;
FIG. 5 shows the top view of the mobile phone charger provided according to the embodiment of the present disclosure.

The embodiment of the present disclosure provides a cable winding device of a mobile phone charger, as shown in FIGs. 1-5, including: a groove is formed in the shell 1 of a mobile phone power adapter, soft rubber 2 is arranged inside the groove, and cable clamping grooves 3 for fixing a mobile phone data cable are formed in the outer side of the soft rubber.

What needs to be explained is that the shell of the mobile phone power adapter takes the shape of a tetragonal prism with four corners. Of course, the shell of the mobile phone power adapter can also take other shapes, such as a sphere, a cylinder and the like; the tetragonal prism is mentioned only because tetragonal prism is the common shape of the shell of the mobile phone power adapter in the market at present.

FIGs. 1-4 show that the groove is formed in one corner of the shell of the mobile phone power adapter, the soft rubber is arranged inside the groove in an injection molding manner, and the cable clamping grooves for fixing the mobile phone data cable are formed in the outer side of the soft rubber.

In the embodiment of the present disclosure, the groove can be formed in at least one corner of the shell of the mobile phone power adapter, and then the following situations are possible:
the groove is formed in any one corner, and the soft rubber is arranged inside the groove in the injection molding manner;
the groove is formed in any two nonadjacent corners, and the soft rubber is arranged inside the groove in the injection molding manner;
the groove is formed in any three corners, and the soft rubber is arranged inside the groove in the injection molding manner;
the groove is formed in all four corners, and the soft rubber is arranged inside the groove in the injection molding manner.

As the groove is formed in any corner, the internal mainboard space is not occupied by the groove, the size of the shell of the mobile phone power adapter is identical to that of the shell of a conventional mobile phone power adapter, and the size of the shell of the mobile phone power adapter is not increased; if the groove is formed in a plurality of corners, not only is the friction area of the soft rubber and the mobile phone data cable increased, but the number of the cable clamping grooves for fixing the mobile phone data cable can be also increased, and thus the capacity of fixing the mobile phone data cable can be increased.

In the embodiment of the present disclosure, to conveniently clamp the mobile phone data cable into the cable clamping grooves or take out the mobile phone data cable from the cable clamping grooves, the soft rubber can be TPU (Thermo-plastic Urethane) soft rubber. TPU soft rubber has the advantages of high elasticity, good thermo-plasticity, low price, fireproofing and flame retardancy, and the like.

In the embodiment of the present disclosure, the soft rubber is arranged inside the groove in the injection molding manner. In practical production, a double-material injection molding technique can be adopted to simultaneously form the shell of the mobile phone power adapter and the TUP soft rubber in the injection molding manner, and the TUP soft rubber and the shell of the mobile phone power adapter are integrally combined, so adhesion stability of the TUP soft rubber and the shell of the mobile phone power adapter can be ensured, and moreover the manufactured mobile phone charger is relatively attractive in appearance.

What needs to be explained is that one side where the soft rubber does not contact the groove is the outer side, at least two cable clamping grooves can be formed in the outer side of the soft rubber, and the two cable clamping grooves are respectively formed in two ends of the soft rubber so as to fix two ends of the mobile phone data cable.

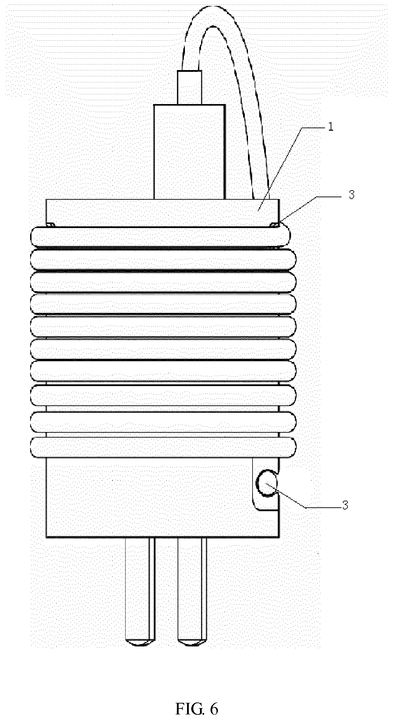

FIG. 6 shows the schematic diagram of the wound cable provided according to the embodiment of the present disclosure.

As shown in the FIG. 6, when being wound, the mobile phone data cable needs to be clamped into the cable clamping groove 3 in the upper end of the soft rubber firstly, is further wound on the shell 1 of the mobile phone power adapter, and is finally clamped into the cable clamping groove 3 in the lower end of the soft rubber, so that the mobile phone data cable can be wound on the shell of the mobile phone power adapter.

What needs to be explained is that, the cross section of the mobile phone data cable takes a circular shape or a shape approximate to the circular shape.

According to the cable winding device of the mobile phone charger, provided according to the embodiment of the present disclosure, as the groove is formed in the shell of the mobile phone power adapter, the internal mainboard space of the mobile phone power adapter can be effectively avoided, and thus the size of the mobile phone power adapter is not increased; the soft rubber is arranged inside the groove, the cable clamping grooves for fixing the mobile phone data cable are formed in the outer side of the soft rubber, and the mobile phone data cable can be orderly wound and fixed on the shell of the mobile phone power adapter and can be prevented from being tangled with other objects disorderly, so that the efficiency of using the mobile phone charger can be improved.

## Claims

1. A cable winding device of a mobile phone charger, comprising: a groove is formed in the shell of a mobile phone power adapter, and soft rubber is arranged inside the groove;
cable clamping grooves for fixing a mobile phone data cable are formed in the outer side of the soft rubber.

2. The device according to claim 1, wherein the soft rubber is thermo-plastic urethane TUP soft rubber.

3. The device according to claim 1, wherein the soft rubber is arranged inside the groove in an injection molding manner.

4. The device according to claim 3, wherein the shell of the mobile phone power adapter takes the shape of a tetragonal prism with four corners.

5. The device according to claim 4, wherein the groove is formed in any one of the corners, and the soft rubber is arranged inside the groove in the injection molding manner.

6. The device according to claim 4, wherein the groove is formed in any two nonadjacent corners and the soft rubber is arranged inside the groove in the injection molding manner.

7. The device according to claim 4, wherein the groove is formed in any three corners and the soft rubber is arranged inside the groove in the injection molding manner.

8. The device according to claim 4, wherein the groove is formed in all four corners and the soft rubber is arranged inside the groove in the injection molding manner.

9. The device according to any one of claims 5, 6, 7 and 8, wherein at least two cable clamping grooves are formed in the outer side of the soft rubber.

10. The device according to claim 9, wherein the two cable clamping grooves are formed in two ends of the soft rubber.
